# EUROPÄISCHE PATENTANMELDUNG

(11) **EP 4 180 356 A1**
(43) Veröffentlichungstag der Anmeldung: **17.05.2023**
(21) Anmeldenummer: 22205770.5
(22) Anmeldetag: 07.11.2022
(51) Int. Cl.: B65D 81/38, A45C 5/02, A45C 11/20, A45F 3/04

(54) **THERMISCH ISOLIERTE TRAGETASCHE**

(30) Priorität: 11.11.2021 DE 202021106156 U
(71) Anmelder: va-Q-tec AG, 97080 Würzburg (DE)
(72) Erfinder: Kletzel, Kristina, 97072 Würzburg (DE); Bock, Tobias, 97318 Kitzingen (DE); Eschenbach, Fabian, 97228 Rottendorf (DE); Kuhn, Dr. Joachim, 97074 Würzburg (DE)
(74) Vertreter: Gleim, Christian Ragnar

(57) **Zusammenfassung**

Thermisch isolierte Tragetasche 0 zum Tragen durch eine Person umfassend eine Isolationshülle 3 mit einem Bodenisolationselement 3a, einer umlaufenden Isolationsseitenwandung 3b und einem Deckelisolationselement 3c, welche derart ausgebildet sind, um einen Aufnahmeraum 2 zu umschließen, weiterhin umfassend eine Tragehülle 1 mit einem Bodenelement 1a, einer umlaufenden Seitenwandung 1b und einem Deckelelement 1c, welche derart ausgebildet sind, um einen Innenraum für die Isolationshülle 3 zu umschließen, wobei das Bodenisolationselement 3a und/oder die Isolationsseitenwandung 3b und/oder das Deckelisolationselement 3c zumindest ein Vakuumisolationselement umfassen, und wobei die Tragehülle 1 zumindest ein Tragelement 6 für das Tragen durch eine Person aufweist.

## Beschreibung

Die Erfindung betrifft eine thermisch isolierte Tragetasche zum Tragen durch eine Person gemäß dem unabhängigen Anspruch.

Thermisch isolierte Tragetaschen liegen auf dem technischen Feld von thermisch isolierten Behältnissen zum temperaturgeführten Transport. Diese dienen dazu, temperatursensible Transportgüter, wie Essen oder Getränke zum Beispiel im Sommer, gekühlt zu transportieren.

Insbesondere sind thermisch isolierte Behältnisse in Form von Transportboxen bekannt. Solche thermisch isolierten Transportboxen sind üblicherweise derart ausgebildet, um ein einfaches Verladen und Verstauen zum Transport bei erhöhten Temperaturen im Freien zu erlauben.

Dabei sind die thermisch isolierten Transportboxen beispielsweise aus einem Schaumformteil gebildet, welches durch das Ausschäumen eines Schäummaterials in einem Formwerkzeug in eine gewünschte Form gebracht wird. Solche thermisch isolierten Transportboxen werden vorteilhafterweise mit Vakuumisolationspaneelen isoliert, die eine besonders effiziente Isolierung bewirken. Derartige Transportboxen weisen jedoch den Nachteil auf, dass diese nicht gut für das Tragen durch eine Person geeignet sind.

Es ist die Aufgabe der vorliegenden Erfindung eine thermisch isolierte Tragetasche bereitzustellen, die die Nachteile aus dem Stand der Technik überwindet, indem sie eine gute Isolierung aufweist und für das Tragen durch eine Person geeignet ist.

Die Aufgabe wird durch die thermisch isolierte Tragetasche gemäß dem unabhängigen Anspruch gelöst. Vorteilhafte Ausgestaltungen bilden den Gegenstand der jeweiligen Unteransprüche.

Die Erfindung umfasst eine thermisch isolierte Tragetasche zum Tragen durch eine Person umfassend eine Isolationshülle mit einem Bodenisolationselement, einer umlaufenden Isolationsseitenwandung und einem Deckelisolationselement, welche derart ausgebildet sind, um einen Innenraum zu umschließen, sowie weiterhin umfassend eine Tragehülle mit einem Bodenelement, einer umlaufenden Seitenwandung und einem Deckelelement, welche derart ausgebildet sind, um den Innenraum und die Isolationshülle zu umschließen, wobei das Bodenisolationselement und/oder die Isolationsseitenwandung und/oder das Deckelisolationselement zumindest ein Vakuumisolationselement (Vakuumisolationspaneel - VIP) umfassen, und wobei die Tragehülle zumindest ein Tragelement für das Tragen durch eine Person aufweist. Die Tragehülle ist aus einem flexiblen robusten Stoff-, Kunststoff oder Metallmaterial, um eine robuste und abriebfeste Aussenfläche zur Verfügung zu stellen. Das Tragelement kann ein Henkel oder ein paar Schultergurte sein. Auf diese Art und Weise können elegante thermisch isolierte Tragetaschen bereitgestellt werden, die aufgrund der verwendeten Vakuumisolationspaneele ein besonders schlankes Erscheinungsbild im Aufbau haben.

Gemäß einem vorteilhaften Aspekt umfasst das Vakuumisolationselement eine Vakuumisolationspaneele, die jeweils einen Wärmeleitfähigkeitskoeffizienten λ in einem Bereich zwischen 1 mW/mK und 200 mW/mK hat. Das Vakuumisolationspaneel hat den Vorteil, dass es aufgrund der Eigensteifigkeit einen besonders einfachen Aufbau ermöglicht.

Bevorzugt weist die Tragehülle zumindest ein an dem Deckelelement angeordnetes erstes Tragelement und zumindest ein an der Seitenwandung angeordnetes zweites Tragelement auf. Das Tragelement kann vorteilhaft ein mittig am Deckelelement angeordneter Henkel oder zwei mit jeweils einem Ende am Deckelement befestigte Schultergurte sein.

Gemäß einem bevorzugten Aspekt ist das Deckelelement mit einem lösbaren Verschluss derart an der Seitenwandung angeordnet, um durch Lösen des Verschlusses und Bewegen des Deckelelements eine Öffnung zum Innenraum freizugeben. Der Verschluss kann ein Reisverschluss sein.

Bevorzugt ist jeweils das Bodenisolationselement mit dem Bodenelement, die Isolationsseitenwandung mit der Seitenwandung und das Deckelisolationselement mit dem Deckelelement lösbar oder nicht-lösbar verbunden. Die lösbare Verbindung kann durch ein Einschieben in eine entsprechende taschenförmige Ausnehmung realisiert werden. Bei einer nicht lösbaren Verbindung kann ein Adhäsiv zwischen den Elementen aufgebracht sein.

Ferner bevorzugt ist jeweils das Bodenisolationselement mit dem Bodenelement, die Isolationsseitenwandung mit der Seitenwandung und das Deckelisolationselement mit dem Deckelelement lösbar durch einen Klettverschluss verbunden. Auf diese Art und Weise lassen sich die Elemente in Ihrer Position zueinander fixieren.

Vorteilhafterweise ist die Isolationshülle formstabil ausgebildet. Die Eigensteifigkeit einer Vakuumisolationspaneele ist dazu geeignet die Formstabilität der Isolationshülle zu erzeugen.

Besonders bevorzugt sind das Bodenisolationselement und/oder das Deckelisolationselement mit der Isolationsseitenwandung lösbar verbunden.

Gemäß einem anderen Aspekt ist das Bodenisolationselement und/oder das Deckelisolationselement mit der Isolationsseitenwandung durch einen Klettverschluss lösbar verbunden.

Vorteilhafterweise weist das Bodenisolationselement und/oder die Isolationsseitenwandung und/oder das Deckelisolationselement jeweils eine Schutzlage auf.

Bevorzugt ist die Tragtasche ein Rucksack oder eine Fahrradtasche.

Die Erfindung wird im Folgenden anhand des in den Zeichnungen dargestellten Beispiels zusätzlich erläutert.

Es zeigen:
- Fig. 1: eine perspektivische Ansicht einer thermisch isolierten Tragetasche als Rucksack gemäß einem Ausführungsbeispiel der Erfindung;
- Fig. 2: eine seitliche Schnittansicht des Rucksacks aus Fig. 1; und
- Fig. 3: eine perspektivische Ansicht der Isolationshülle für die Tragetasche aus Fig. 1.

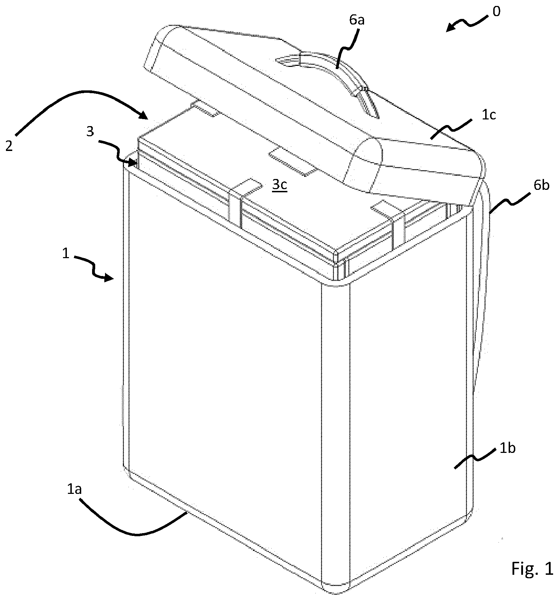

In **Fig. 1** ist eine thermisch isolierte Tragetasche 0 zum Tragen durch eine Person gemäß einem Ausführungsbeispiel der Erfindung gezeigt.

Im Inneren ist der obere Teil einer Isolationshülle 3 zu sehen, die im gezeigten geschlossenen Zustand einen Aufnahmeraum zur Aufnahme des Transportgutes umschließt, wobei von der Isolationshülle 3 mit der Oberseite ein Teilabschnitt des Deckelisolationselement 3c zu sehen ist.

Die in der gezeigten Darstellung teilweise zu sehende, innenliegende Isolationshülle 3 wird von einer Tragehülle 1 umschlossen. Die Tragehülle 1 umfasst unterseitig ein rechteckiges Bodenelement 1a. Von dem Bodenelement 1a nach oben erstreckt sich eine vollständig umlaufende Seitenwandung 1b, die innenliegend einen Innenraum mit rechteckigem Grundriss bildet, der eine Form und Größe hat die Isolationshülle 3 bündig zu umfassen. Das obenliegende Deckelelement 1c hat seitlich umlaufend einen Verschluss um mit der Seitenwandung 1b verbunden zu werden, um den Innenraum 2 und die Isolationshülle 3 zu umschließen.

Das Deckelelement 1c ist mit einem Reisverschluss an der Seitenwandung 1b verschließbar angeordnet, wobei durch Lösen des Verschlusses und Bewegen des Deckelelements 1c eine Öffnung 4 zum Innenraum 2 freigegeben wird.

Das Bodenisolationselement 3a und die Isolationsseitenwandung 3b und das Deckelisolationselement 3c haben in diesem Beispiel genau ein Vakuum isolationselement.

Beim dargestellten Rucksack hat die Tragehülle 1 drei Tragelemente 6a, 6b in der Form von einem Tragehenkel 6a und zwei Schulterriemen 6b für das Tragen durch eine Person.

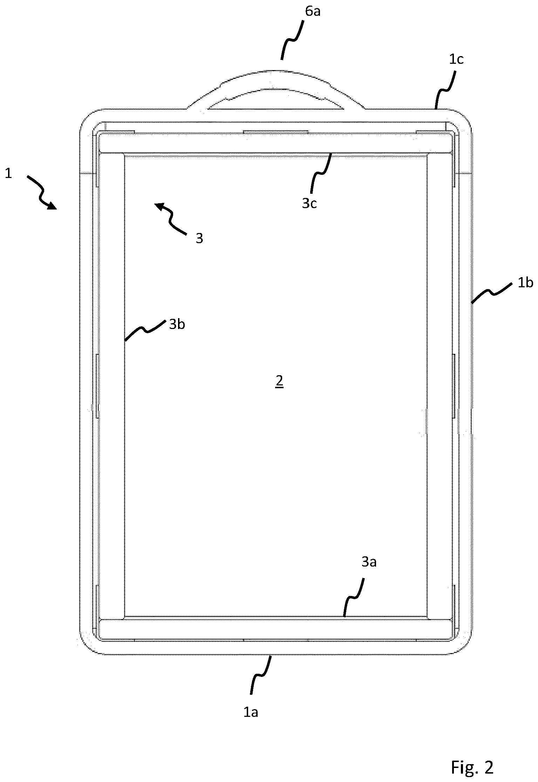

In **Fig. 2** ist die seitliche Schnittansicht des Rucksacks dargestellt. Die Isolationshülle ist mit einem untenliegenden Bodenisolationselement 3a, einer seitlich umlaufenden Isolationsseitenwandung 3b und einem obenliegenden Deckelisolationselement 3c ausgebildet, die einen Aufnahmeraum 2 für das zu transportierende Gut umschließen.

Dabei ist das Bodenisolationselement 3a mit dem Bodenelement 1a, die Isolationsseitenwandung 3b mit der Seitenwandung 1b und das Deckelisolationselement 3c mit dem Deckelelement 1c lösbar mittels Klettverschluss verbunden.

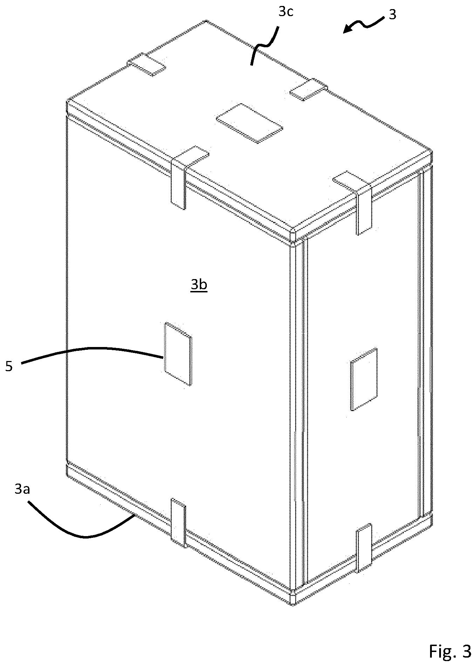

In **Fig. 3** ist eine perspektivische Ansicht der herausgenommenen Isolationshülle für den Rucksack aus Fig. 1 dargestellt. Die Isolationshülle 3 ist formstabil ausgebildet, indem die Vakuumisolationselemente jeweils Vakuumisolationspaneele sind. Die Vakuumisolationspaneele haben jeweils einen Wärmeleitfähigkeitskoeffizienten λ in einem Bereich zwischen 1 mW/mK und 200 mW/mK.

Das Bodenisolationselement 3a und/oder die Isolationsseitenwandung 3b und/oder das Deckelisolationselement 3c haben jeweils eine Schutzlage 5 in der Form eines quadratischen robusten Stoffstücks.

## Patentansprüche

1. Thermisch isolierte Tragetasche (0) zum Tragen durch eine Person umfassend
• eine Isolationshülle (3) mit einem Bodenisolationselement (3a), einer umlaufenden Isolationsseitenwandung (3b) und einem Deckelisolationselement (3c), welche derart ausgebildet sind, um einen Aufnahmeraum (2) zu umschließen, weiterhin umfassend
• eine Tragehülle (1) mit einem Bodenelement (1a), einer umlaufenden Seitenwandung (1b) und einem Deckelelement (1c), welche derart ausgebildet sind, um einen Innenraum für die Isolationshülle (3) zu umschließen, wobei
das Bodenisolationselement (3a) und/oder die Isolationsseitenwandung (3b) und/oder das Deckelisolationselement (3c) zumindest ein Vakuumisolationselement umfassen, und wobei die Tragehülle (1) zumindest ein Tragelement (6) für das Tragen durch eine Person aufweist.

2. Thermisch isolierte Tragetasche (0) nach Anspruch 1, wobei das Vakuumisolationselement eine Vakuumisolationspaneele umfasst, die jeweils einen Wärmeleitfähigkeitskoeffizienten λ in einem Bereich zwischen 1 mW/mK und 200 mW/mK aufweist.

3. Thermisch isolierte Tragetasche (0) nach Anspruch 1 oder 2, wobei die Tragehülle (1) zumindest ein an dem Deckelelement (1c) angeordnetes erstes Tragelement (6a) und zumindest ein an der Seitenwandung (1b) angeordnetes zweites Tragelement (6b) aufweist.

4. Thermisch isolierte Tragetasche (0) nach einem der vorangehenden Ansprüchen, wobei das Deckelelement (1c) mit einem lösbaren Verschluss derart an der Seitenwandung (1b) angeordnet ist, um durch Lösen des Verschlusses und Bewegen des Deckelelement (1c) eine Öffnung (4) zum Innenraum (2) freizugeben.

5. Thermisch isolierte Tragetasche (0) nach einem der vorangehenden Ansprüchen, wobei jeweils das Bodenisolationselement (3a) mit dem Bodenelement (1a), die Isolationsseitenwandung (3b) mit der Seitenwandung (1b) und das Deckelisolationselement (3c) mit dem Deckelelement (1c) lösbar oder nicht-lösbar verbunden sind.

6. Thermisch isolierte Tragetasche (0) nach Anspruch 5, wobei jeweils das Bodenisolationselement (3a) mit dem Bodenelement (1a), die Isolationsseitenwandung (3b) mit der Seitenwandung (1b) und das Deckelisolationselement (3c) mit dem Deckelelement (1c) lösbar durch einen Klettverschluss verbunden sind.

7. Thermisch isolierte Tragetasche (0) nach einem der vorangehenden Ansprüchen, wobei die Isolationshülle (3) formstabil ausgebildet ist.

8. Thermisch isolierte Tragetasche (0) nach einem der vorangehenden Ansprüchen, wobei die Tragehülle (1) formstabil oder verformbar ausgebildet ist.

9. Thermisch isolierte Tragetasche (0) nach einem der vorangehenden Ansprüchen, wobei das Bodenisolationselement (3a) und/oder das Deckelisolationselement (3c) mit der Isolationsseitenwandung (3b) lösbar verbunden sind.

10. Thermisch isolierte Tragetasche (0) nach Anspruch 9, wobei das Bodenisolationselement (3a) und/oder das Deckelisolationselement (3c) mit der Isolationsseitenwandung (3b) durch einen Klettverschluss lösbar verbunden sind.

11. Thermisch isolierte Tragetasche (0) nach einem der vorangehenden Ansprüchen, wobei das Bodenisolationselement (3a) und/oder die Isolationsseitenwandung (3b) und/oder das Deckelisolationselement (3c) jeweils eine Schutzlage (5) aufweist.

12. Thermisch isolierte Tragetasche (0) nach einem der vorangehenden Ansprüchen, wobei die Tragetasche (0) ein Rucksack oder eine Fahrradtasche ist.
